# EUROPEAN PATENT APPLICATION

(11) **EP 2 786 923 A1**
(43) Date of publication of application: **08.10.2014**
(21) Application number: 14385001.4
(22) Date of filing: 26.02.2014
(51) Int. Cl.: B62K 3/00, B62M 1/28

(54) **Scooter pedal**

(30) Priority: 28.02.2013 ES 201300203 U
(71) Applicant: Ramirez Almudever, Zacarias, 46290 Alcacer (Valencia) (ES)
(72) Inventor: Ramirez Almudever, Zacarias, 46290 Alcacer (Valencia) (ES)
(74) Representative: Molina Garcia, Julia

(57) **Abstract**

The present invention refers to a new model of propelled scooter by the action of two pedals (1) with a closed-circuit transmission, formed by two chains (7) with stretched rubber/string, which activate two free wheels (8), achieving at the same time to turn the rear wheel in the same and one sense. The novelty about this model is based in the disposition of the two rockers foot-switches, which transfer the energy through a rock shaft (2) and two free wheels (8), transforming this movement from alternating to rotating. The rock shaft (2) transmits the energy and when one pedal goes up, the other goes down. At the end of each pedal there is a chain or a strap, which activates the two free wheels (8). The chain or strap is held by a closed-circuit self-stretched by pulleys.

## Description

### Scooter with pedals.

The following invention refers to a new model of propelled scooter by the action of two pedals with a closed-circuit transmission, formed by 2 chains with stretched rubber/string, which activate two free wheels, achieving at the same time to turn the rear wheel. The novelty about this model, is based in the disposition of the 2 rockers foot-switches, which transfer the energy through a rock shaft and 2 free wheels, transforming this movement from alternating to rotating.

### BRIEF DESCRIPTION OF THE DRAWINGS

For a better understanding on the actual specifications report, find attached several drawings. As a brief example, we introduce you to a practical case study for the use of the scooter. In this drawing you can see the invention in both plan and elevation :
"1" pedal.
"2" rock shaft..
"3" structure.
"4" axis of rotation by pedal.
"5" pulley.
"6" elastic string.
"7" chain.
"8" free wheels.

### DETAILED DESCRIPTION OF THE INVENTION

Regarding to picture 1, actual invention is characterized for the transmission of the vertical-swing movement in horizontal propulsion, which is formed by two rocker foot-switches one against each other by a rock shaft. The rock shaft transmits the energy and when one pedal goes up, the other goes down. At the end of each pedal there is a chain or a strap, which activates the two free wheels, causing then the turn of the wheel in the same and one sense. The chain or strap is held by a closed-circuit self-stretched by pulleys.

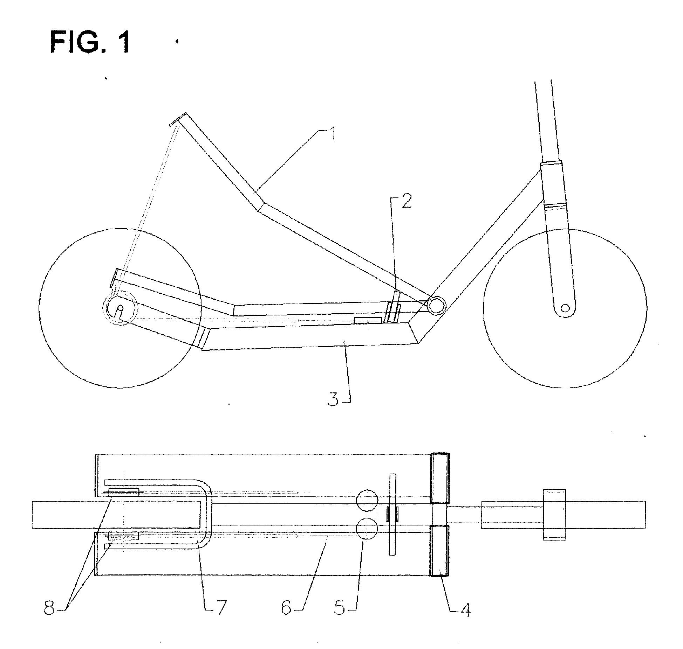

## Claims

1. Scooter with pedals composed by : two tilted and oscillating pedals by the mediation of a rock shaft;

2. Scooter with pedals according to the recognition 1, **characterized by** the use of a closed-circuit self-stretched by pulleys, chains or transmission belts', in order to transmit the movement/action between the pedals and the free wheels.
